# EUROPEAN PATENT APPLICATION

(11) **EP 4 797 703 A1**
(43) Date of publication of application: **26.08.2026**
(21) Application number: 24878860.6
(22) Date of filing: 08.10.2024
(51) Int. Cl.: H04N 21/254

(54) **METHOD AND APPARATUS FOR VIDEO PUBLISHING, METHOD AND APPARATUS FOR VIDEO PLAYING, AND DEVICE AND STORAGE MEDIUM**

(30) Priority: 17.10.2023 CN 202311345181
(71) Applicant: Beijing Zitiao Network Technology Co., Ltd., Beijing 100190 (CN)
(72) Inventor: XU, Yaxi, Beijing 100028 (CN)
(74) Representative: Grünecker Patent- und Rechtsanwälte PartG mbB
(86) International application number: PCT/CN2024/123333
(87) International publication number: WO 2025/082216

(57) **Abstract**

Embodiments of the present disclosure provide methods, apparatuses, devices and storage media for video posting and playing. A method for video posting includes: presenting a posting page of a video in response to a trigger of a first user, the posting page being provided with a consumption configuration entry for the video; obtaining, via the consumption configuration entry, a resource consumption configuration input by the first user for the video, the resource consumption configuration indicating at least a resource amount to be consumed to obtain a viewing permission of the video; and posting the video in association with the resource consumption configuration based on a post indication for the video. Thus, the work poster may be supported to autonomously and flexibly configure the viewing permission of the work according to needs. This expands the type of work posting, providing diverse work posting and viewing functions.

## Description

This application claims the benefit of Chinese Patent Application No. 2023113451817, entitled "Method, Apparatus, Device and Storage Medium for Video Posting and Playing", and filed on October 17, 2023, the entire content of which is incorporated herein by reference.

### FIELD

Example embodiments of the present disclosure generally relate to the field of computers, and in particular, to methods, apparatuses, devices, and computer-readable storage media for video posting and playing.

### BACKGROUND

Currently, more and more platforms (e.g., applications, websites, etc.) are designed to provide various services to users. For example, a user may post, browse, and view various types of multimedia content (e.g., videos) in a platform. The poster of the video may also configure the video to be posted before the video is posted. The poster may further post the configuration information in the platform in association with the video. The browsing party/viewer of the video may browse the video with the configuration information in the platform.

### SUMMARY

In a first aspect of the present disclosure, a method for video posting is provided. The method includes: in response to a trigger of a first user, presenting a posting page of a video, the posting page being provided with a consumption configuration entry for the video; obtaining, via the consumption configuration entry, a resource consumption configuration input by the first user for the video, the resource consumption configuration at least indicating a resource amount to be consumed to obtain a viewing permission of the video; and posting the video in association with the resource consumption configuration based on a posting indication for the video.

In a second aspect of the present disclosure, a method for video playing is provided. The method includes: in response to determining presentation of a video to a second user, determining whether the second user has a viewing permission of the video based on a resource consumption configuration of the video and historical consumption information of the second user, the resource consumption configuration at least indicating a resource amount to be consumed to obtain the viewing permission of the video; in accordance with a determination that the second user lacks the viewing permission of the video, presenting a consumption entry for receiving the resource consumption; and in response to receiving the indicated resource amount via the consumption entry, determining that the second user has the viewing permission of the video, and playing the video.

In a third aspect of the present disclosure, an apparatus for video posting is provided. The apparatus includes: a page presenting module configured to present a posting page of a video in response to a trigger of a first user, the posting page being provided with a consumption configuration entry for the video; a configuration obtaining module configured to obtain, via the consumption configuration entry, a resource consumption configuration input by the first user for the video, the resource consumption configuration at least indicating a resource amount to be consumed to obtain a viewing permission of the video; and a video posting module configured to post the video in association with the resource consumption configuration based on a post indication for the video.

In a fourth aspect of the present disclosure, an apparatus for video playing is provided. The apparatus includes: a permission determining module configured to determine, in response to determining presentation of a video to a second user, whether the second user has a viewing permission of the video based on a resource consumption configuration of the video and historical consumption information of the second user, the resource consumption configuration at least indicating a resource amount to be consumed to obtain the viewing permission of the video; an entry presenting module configured to present, in accordance with a determination that the second user lacks the viewing permission of the video, a consumption entry for receiving resource consumption; and a video playing module configured to, in response to receiving the indicated resource amount via the consumption entry, determine that the second user has the viewing permission of the video, and play the video.

In a fifth aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect or the second aspect.

In a sixth aspect of the present disclosure, a computer-readable storage medium is provided. The computer-readable storage medium has a computer program stored thereon, and the computer program is executable by a processor to implement the method according to the first aspect or the second aspect.

According to a seventh aspect of the present disclosure, there is provided a computer program product, including a computer program. The computer program, when executed by a processor, implements the method according to the first aspect and/or the second aspect of the present disclosure.

It should be understood that the content described in this content section is not intended to limit the key features or important features of the embodiments of the present disclosure, nor is it intended to limit the scope of the present disclosure. Other features of the present disclosure will become easily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIGS. 2A to 2G illustrate schematic diagrams of example pages for video posting according to some embodiments of the present disclosure;
FIGS. 3A to 3C illustrate schematic diagrams of example pages for collection posting according to some embodiments of the present disclosure;
FIGS. 4A to 4E illustrate schematic diagrams of example pages for video playing according to some embodiments of the present disclosure;
FIG. 5 illustrates a schematic diagram of an example page including a consumption guidance interface according to some embodiments of the present disclosure;
FIG. 6 illustrates a flowchart of a process for video posting according to some embodiments of the present disclosure;
FIG. 7 illustrates a flowchart of a process for video playing according to some embodiments of the present disclosure;
FIG. 8 illustrates a flowchart of an apparatus for video posting according to some embodiments of the present disclosure;
FIG. 9 illustrates a block diagram of an apparatus for video playing according to some embodiments of the present disclosure; and
FIG. 10 illustrates a block diagram of a device capable of implementing various embodiments of the present disclosure.

### DETAILED DESCRIPTION

Embodiments of the present disclosure will be described in more detail below with reference to the accompanying drawings. While some embodiments of the present disclosure are shown in the accompanying drawings, it should be understood that the present disclosure may be implemented in various forms, and should not be interpreted as limited to the embodiments described herein, but rather, these embodiments are provided for a more thorough and complete understanding of the present disclosure. It should be understood that the drawings and embodiments of the present disclosure are for illustrative purposes only and are not intended to limit the scope of the present disclosure.

In the description of the embodiments of the present disclosure, the terms "including" and the like should be understood as open-ended, i.e., "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below.

Herein, unless explicitly stated, "in response to A" performs a step and does not imply that this step is performed immediately after "A", but may include one or more intermediate steps.

It may be understood that the data involved in the technical solution (including but not limited to the data itself, the obtaining or the usage of the data) should follow the requirements of the corresponding laws, regulations and relevant provisions.

It can be understood that, before the technical solutions disclosed in the embodiments of the present disclosure are used, users should be informed of the types, the usage scope, the usage scenario and the like of the personal information involved in the present disclosure in an appropriate manner and in accordance with relevant laws and regulations, and the authorization of the user should be obtained.

For example, in response to receiving an active request from a user, a prompt is sent to the user to explicitly prompt the user that the requested operation will need to obtain and use personal information of the user, so that the user can proactively choose whether to provide the personal information to software or hardware , such as an electronic device, application, server or storage medium, that performs the operations of the technical solution of the present disclosure.

As an optional but non-limiting implementation, in response to receiving an active request of the user, the prompt information may be sent to the user via, for example, a pop-up window, in which the prompt information may be presented in text. In addition, the pop-up window may further include selection controls for the user to choose "agree" or "disagree" to provide personal information to the electronic device.

It may be understood that the above process of notifying and obtaining a user authorization is merely illustrative, and does not constitute a limitation on implementations of the present disclosure, and other manners meeting relevant laws and regulations may also be applied to implementations of the present disclosure.

As briefly mentioned above, the user posting a video (referred to as a video poster) may also configure the video to be posted before the video is posted. The video poster may further post the video in association with the configuration information in the platform. The browsing party/viewer of the video may browse the video with the configuration information in the platform.

Conventionally, a poster can only configure information such as a title, description information, and a cover of a video. Since the platform does not have the ability of configuring resource consumption for a poster (which may also be referred to as a creator), the poster cannot configure the resource consumption of the video on the platform. This may affect the creating and posting experience of the poster on the video. Therefore, it is desirable to enhance the platform with the ability to configure resource consumption, satisfying the requirements of the poster in desiring to configure the resource consumption of the video.

According to some embodiments of the present disclosure, a solution for video posting and playing is provided. According to the solution of the embodiments of the present disclosure, in a video posting scenario, a posting page of a video is presented in response to a trigger of a poster (i.e., a first user). The posting page is provided with a consumption configuration entry for the video. Herein, for convenience of discussion, "poster" and "first user" may be used interchangeably. A resource consumption configuration input by the poster for the video is obtained via the consumption configuration entry. Based on a post indication for the video, the video is posted in association with the resource consumption configuration. In the video playing scenario, if the video is to be presented to the browsing party (i.e., a second user), whether the second user has a viewing permission of the video is determined based on the resource consumption configuration of the video and the historical consumption information of the second user. Herein, for convenience of discussion, "browsing party" and "second user" may be used interchangeably. If it is determined that the second user does not have the viewing permission of the video, a consumption entry for receiving the resource consumption is presented. In response to receiving the indicated resource amount via the consumption entry, it is determined that the second user has the viewing permission of the video, and playing the video.

In this way, according to some embodiments of the present disclosure, a work poster is enabled to proactively and flexibly configure a viewing permission of a work based on needs. This expands the type of work posting, providing diverse work posting and viewing functions. This not only promotes enthusiasm in work creating and posting, but also helps the poster obtain the resource benefits, and improves the user experience in the work posting platform. The posted video works may be recommended in the recommended content stream of the application as needed, and the browsing party obtains the viewing permission by consuming the corresponding resources as needed.

Example embodiments of the present disclosure are described below with reference to the accompanying drawings.

### Example Environment

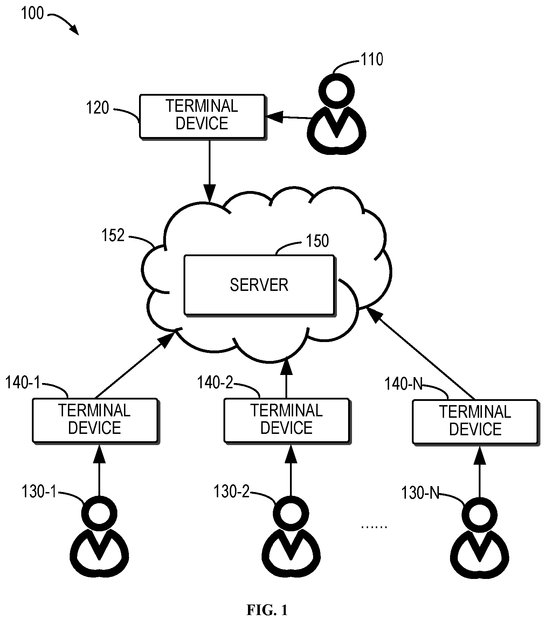

FIG. 1 illustrates a schematic diagram of an example environment 100 in which embodiments of the present disclosure may be implemented. In the environment 100, a user 110 may post a video on a target platform through an associated terminal device 120. In some scenarios, the user 110 is also referred to as a poster of a video.

One or more users 130-1, 130-2, ..., 130-N may browse or view videos posted by the user 110 on the target platform through respective associated terminal devices 140-1, 140-2, ..., 140-N. For ease of discussion, users 130-1, 130-2, ..., 130-N may be collectively or individually referred to as the user 130, and the terminal devices 140-1, 140-2, ..., 140-N may be collectively or individually referred to as the terminal device 140. In some scenarios, the user 130 may also be referred to as a viewer, a browsing party, or an observer of the video.

In some embodiments, the terminal device 120 and the terminal device 140 may be respectively installed with a platform that supports video posting and video playing. Such platforms may be, for example, applications or websites. The user 110 and the user 130 may operate the terminal device 120 and the terminal device 140, to access a corresponding application or website. In some embodiments, the platform for posting videos and the platform for playing videos may be different platforms. For example, the user 120 performs editing and posting of the video on a first platform, with the posting operation indicating that the video is to be posted on a second platform. The user 140 may browse the video on the second platform.

In some embodiments, the terminal device 120 and the terminal device 140 may further communicate with a server 150 via a network 152, to enable the provision of video posting service and video playing service. The server 150 may provide functions such as management, configuration, and maintenance of applications or websites. It should be noted that the terminal device 120 may also perform various operations such as video browsing on the target platform based on the operation of the user 110, and the terminal device 140 may also post the video to the target platform based on the operation of the user 130. In the following, the operations described with reference to the terminal device 120 may be similarly implemented on the terminal device 140, and the operations described with reference to the terminal device 140 may also be similarly implemented on the terminal device 120.

The terminal device 120 and the terminal device 140 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a television receiver, a radio broadcast receiver, an electronic book device, a gaming device, or any combination of the foregoing, including accessories and peripherals of these devices, or any combination thereof. In some embodiments, terminal devices 120, 140 may also support any type of interface for a user (such as a "wearable" circuit, etc.). The server 150 may be any type of computing systems/servers capable of providing computing capabilities, including, but not limited to, mainframes, edge computing nodes, computing devices in a cloud environment, and the like.

It should be understood that the structures and functions of the various elements in the environment 100 are described for illustrative purposes only and do not imply any limitation to the scope of the present disclosure.

Various example implementations of the present disclosure will be described in detail below.

### Example Embodiments of Video Posting

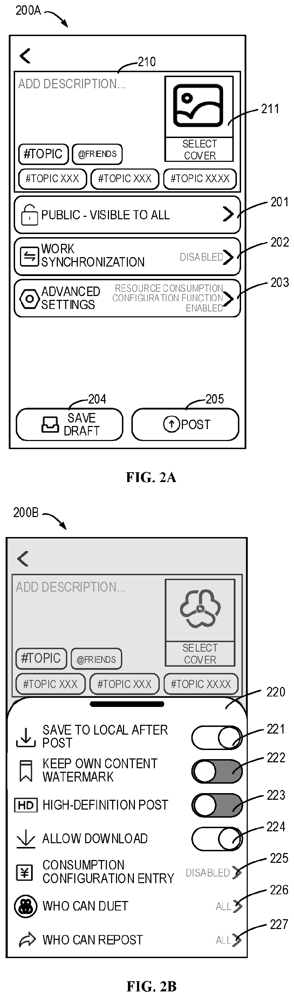

FIGS. 2A to 2G illustrate schematic diagrams of example pages 200A to 200G for video posting according to some embodiments of the present disclosure. It should be understood that the pages shown in the accompanying drawings are merely examples, and various page designs may exist in practice. Various graphical elements on the page may have different layouts and different visual representations, one or more of which may be omitted or replaced, and one or more other elements may also be present. Embodiments of the present disclosure are not limited in this regard.

The pages shown in the example pages 200A to 200G may be presented at the terminal device 120. For ease of discussion, the example page 200A to the example page 200G will be described with reference to the environment 100 of FIG. 1.

In the environment 100, the terminal device 120 presents a posting page of the video. The poster of the video (i.e., the first user, such as the user 110) may post the video via the posting page, for example, post the video to the target application. In some embodiments, the posting page of the video presented by the terminal device 120 may be a work posting page of the target application, i.e., the user 110 posts the video through the work posting page of the target application, and the video is posted to the target application. Alternatively or additionally, the posting page may also be a page provided by another application or platform. For example, the posting page may be a posting page provided by the video creating application. The user posts the video into a target application other than the video creating application via a posting page provided by the video creating application. The target application is an application that supports at least video browsing services.

In some embodiments of the present disclosure, the posting page of the video is provided with a consumption configuration entry for the video. In some embodiments, the consumption configuration entry may be provided directly on the posting page. That is, the consumption configuration entry is presented directly on the posting page. In some embodiments, if the configuration information for the video is of large amount and miscellaneous, to improve the posting experience of the poster, the configuration entries corresponding to the different configuration information are often categorized and presented, to present the posting page with a neatly organized layout. For example, the posting page may include a setting entry. The terminal device 120, in response to detecting a trigger operation on the setting entry, presents a setting interface including a plurality of configuration entries. The setting interface may be provided with at least a consumption configuration entry.

As shown in FIG. 2A, the example page 200A provides the description information configuration entry 210 of the video. The terminal device 120 may receive, via the description information configuration entry 210, description information input by the user 110 for describing the video. The example page 200A also provides a cover configuration entry 211. The terminal device 120 may receive, via the cover configuration entry 211, a video cover image input by the user 110. The example page 200A also provides a public entry 201. The terminal device 120 may determine, via the user input received by the public entry 201, a user group that may browse the video to be posted. For example, if the user input is visible to everyone, the terminal device 120 may determine that all users may browse the video. If the user input is visible to friends only, the terminal device 120 may determine that only the friends of the user 110 in the target application may browse the video.

The example page 200A also provides a synchronization entry 202. The terminal device 120 may determine, via the user input received via the synchronization entry 202, to which platform outside the application platform providing the example page 200A the video is to be posted. The example page 200A also provides a draft saving control 204 and a post control 205. The terminal device 120 may, in response to detecting a trigger operation on the draft saving control 204, save the configuration information obtained via the example page 200A in association with the video to be posted to a draft box. The terminal device 120 may, in response to detecting a trigger operation on the post control 205, post the configuration information obtained via the example page 200A and the video to be posted to the target application.

The example page 200A also provides a setting entry 204. The terminal device 120 may, in response to detecting a trigger operation on the setting entry 204, presents the example page 200B shown in FIG. 2B. As shown in FIG. 2B, the example page 200B includes a setting interface 220, and the setting interface 220 includes a plurality of configuration entries. The plurality of configuration entries may include, for example, a configuration entry 221 for configuring whether to save locally after posting, a configuration entry 222 for configuring whether to keep a content watermark, a configuration entry 223 for configuring whether to post in high definition, a configuration entry 224 for configuring whether browsing parties are allowed to download, a configuration entry 225 for configuring a consumption configuration for the video (i.e., a consumption configuration entry), a configuration entry 226 for configuring who may duet with the video, and a configuration entry 227 for configuring who may forward. It is to be noted that the configuration entry 221, the configuration entry 222, the configuration entry 223, and the configuration entry 224 are presented as toggle switches, which may be switched to different states to indicate whether the corresponding functions are enabled or disabled.

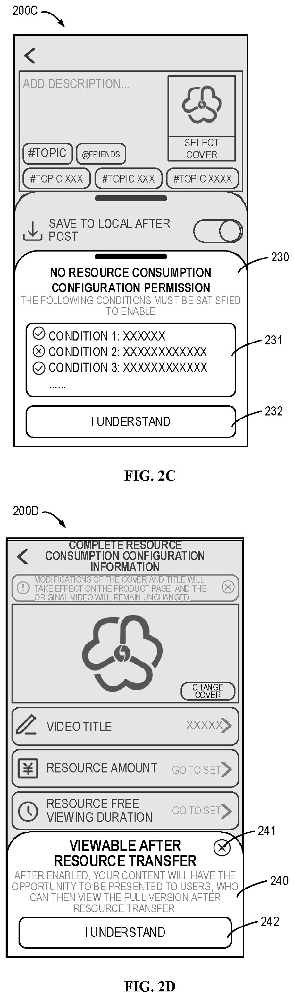

The terminal device 120 may present, in response to detecting a trigger operation on the consumption configuration entry (e.g., the configuration entry 225), a configuration interface including at least an input control for resource amount. In some embodiments, the terminal device 120 may directly present the configuration interface based on a trigger on the consumption configuration entry. In some embodiments, the terminal device 120 may further determine whether the poster meets the requirement related to the consumption configuration. If the poster does not meet the requirement, the terminal device 120 may determine that the poster does not have permission to configure resource consumption. In some embodiments, if it is determined whether the poster meets the requirement related to the consumption configuration, the terminal device 120 may notify, via any suitable prompt information such as through playing audio, displaying text, displaying images, the poster that it is not available to configure resource consumption. For example, the terminal device 120 may, for example, present the example page 200C shown in FIG. 2C.

The example page 200C presents a prompt interface 230. The prompt interface 230 presents a region 231 and an operation control 232. The region 231 presents at least part of the requirements related to the consumption configuration. The terminal device 120 may, in response to detecting a trigger operation on the operation control 232, cancel the presentation of the prompt interface 230 and switch back to presenting the example page 200B shown in FIG. 2B, and keep the configuration entry 225 for configuring resource consumption of the video on the example page 200B shown in FIG. 2B in a disabled state, and the closed state indicates that the configuration entry 225 cannot receive the consumption configuration for the video. It may be understood that, if the poster meets the requirement, the terminal device 120 may present a configuration interface at least including an input control for resource amount, and switch the configuration entry 225 to an enabled state, and the enabled state indicates that the terminal device 120 may receive the resource consumption configuration for the video input by the poster based on the trigger operation on the configuration entry.

In some embodiments, if the terminal device 120 detects the trigger operation on the consumption configuration entry for the first time, the terminal device 120 may provide guidance information for the resource consumption configuration. The terminal device 120 may for example provide guidance information in any suitable manner such as playing audio, presenting text, presenting an image, or the like. For example, the terminal device 120 may, for example, present the example page 200D shown in FIG. 2D. The example page 200D presents a guidance interface 240. "After enabled, your content will have the opportunity to be shown to users, and the users can watch the full version after converting resources". The guidance interface 240 further includes an operation control 241 and an operation control 242. The terminal device 120 may, in response to detecting a trigger operation on the operation control 241 or the operation control 242, cancel the presentation of the guidance interface 240, and switch to presenting a configuration interface that includes at least an input control for resource amount.

The terminal device 120 may obtain the resource consumption configuration for the video input by the poster of the video through the configuration interface. The resource consumption configuration at least indicates the resource amount required to obtain the viewing permission of the video. The resources include any type of resource that may be exchanged between the poster and the viewer of the video, including currency, points, or various types of entities or virtual resources defined in various applications. In some embodiments, the resource consumption configuration may further indicate a resource-free viewing duration of the video (which may also be referred to as a trial viewing duration of the video), and/or identification information of the video (e.g., a cover of the video, a title of the video, etc.).

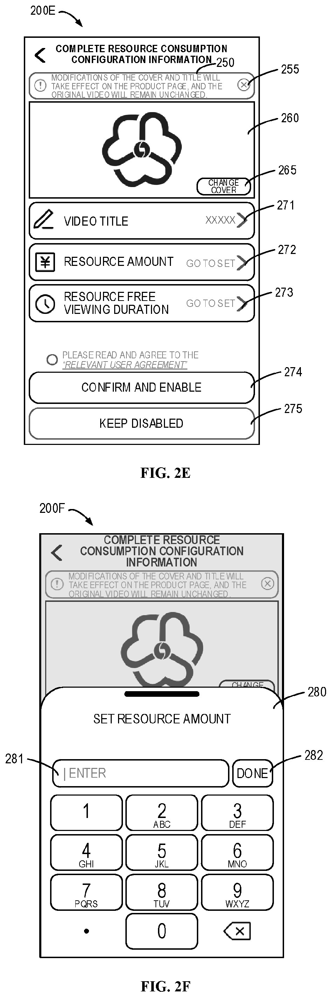

An example of a configuration interface may refer to the example page 200E as shown in FIG. 2E. As shown in FIG. 2E, the example page 200E includes prompt information 250 and an operation control 255 for canceling presentation of the prompt information 250. The example page 200E includes a region 260 and an operation control 265. The terminal device 120 may, in response to a trigger for the operation control 265, obtain a video cover image input by the poster, and present the video cover image in the region 260. The example page 200E also includes an input control 271 for the video title, an input control 272 for the resource amount, and an input control 273 for the resource-free viewing duration of the video. The terminal device 120 may, in response to a trigger for the input control 271, receive the video title input on the example page 200E.

The terminal device 120 may, in response to a trigger for the input control 272, receive a configuration for the resource amount input on the example page 200E. Specifically, the terminal device 120 may, for example, in response to detecting a trigger operation on the input control 272 in the example page 200E, present the example page 200F as shown in FIG. 2F. An example page 200F is presented with an resource amount configuration interface 280. The resource amount configuration interface 280 presents an input entry 281 and a completion control 282. The terminal device 120 may receive a configuration value for the resource amount input by the poster through the input entry 281. For example, the resource amount configuration interface 280 may also present at least one suggested value for the resource amount, and the terminal device 120 may, in response to detecting a selection operation on the target suggested value, present the value in the input entry 281. The terminal device 120 may receive the value presented in the input entry 281 in response to detecting a trigger operation on the completion control 282, and determine the value as the resource amount to be consumed to obtain the viewing permission of the video as configured by the poster.

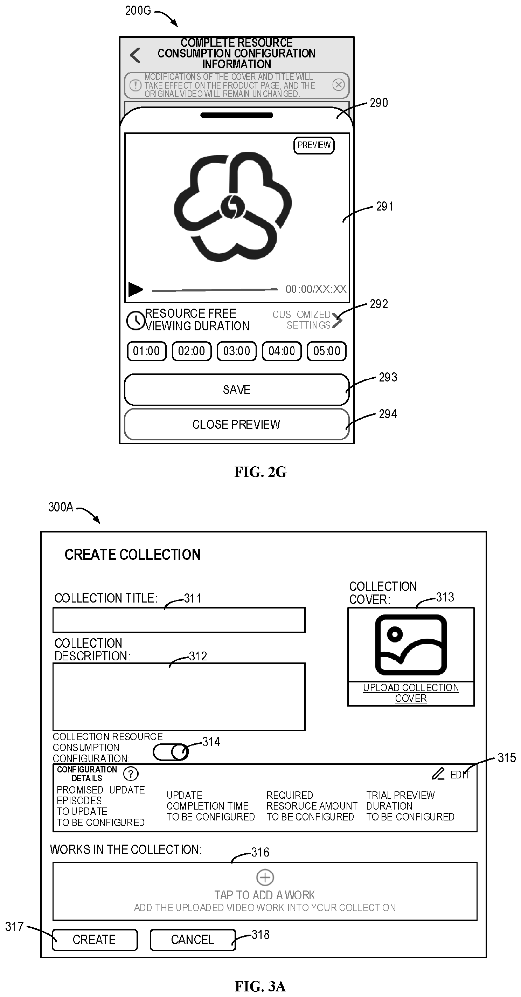

The terminal device 120 may, based on a trigger for the input control 273, receive the resource-free viewing duration, which is also referred to as a trial duration or a free duration, for the video, that is input on the example 200E. Specifically, the terminal device 120 may, in response to detecting a trigger operation on the input control 273 on the example page 200E, present the example page 200G shown in FIG. 2G. The example page 200G may include, for example, a preview interface 290 that is provided for the video. The preview interface 290 includes an input control 292, and the terminal device 120 may, in response to a trigger for the input control 292, obtain the viewing duration input by the poster.

In some embodiments, the preview interface 290 further includes a region 291. The terminal device 120 may present, in the region 291, a resource-free playing preview of the video within the indicated viewing duration. Alternatively or additionally, an interface preview may be presented in the region 291 for requesting resource consumption to obtain a viewing permission. Providing such a preview may enable the video poster to view the effect as the video will appear to a browsing party after a corresponding resource consumption configuration has been completed, so as to determine whether to adjust the current resource consumption configuration as needed, e.g., to adjust the resource-free viewing duration, the identification information of the video, or the like.

In some embodiments, the preview interface 290 further includes a save control 293 and a close control 294. The terminal device 120 may, in response to detecting a selection operation on the save control 293, obtain the viewing duration input by the poster in the preview interface 290. The terminal device 120 may, in response to detecting a selection operation on the close control 294, delete the configuration information input by the poster in the configuration interface 290 and cancel the presentation of the preview interface 290.

It may be understood that, the terminal device 120, in response to detecting a selection operation on the completion control 282 in FIG. 2F, or detecting a selection operation on the save control 293 or the close control 294 in FIG. 2G, switches back to presenting the example page 200E, and presents, in the corresponding control of the example page 200E, the resource amount and the viewing duration input by the poster in the resource amount configuration interface 280 and the preview interface 290. The example page 200E also includes a confirmation control 274 and a close control 275. The terminal device 120 may receive, in response to detecting a selection operation on the confirmation control 274, the resource consumption configuration input by the poster in the example page 200E, i.e., receive the video cover, the video title, the resource amount to be consumed for obtaining the viewing permission of the video, and the resource-free viewing duration of the video that are input by the poster in the example page 200E. The terminal device 120 may, in response to detecting a selection operation on the confirmation control 275, delete the resource consumption configuration input by the poster in the example page 200E and keep the configuration entry 225 in the example page 200B shown in FIG. 2B for configuring video resource consumption to be in a disabled state.

If a large amount of information needs to be presented in the application, the information is often categorized for presentation, so that the user may obtain the information in a more concise manner. Categorizing for presentation often needs to set a plurality of navigation tabs corresponding to different information on a page. The user may obtain, by switching between navigation tabs, a page corresponding to the tab. In some embodiments, navigation tabs for navigating to different pages may be provided in the application 120. In some embodiments of the present disclosure, a page, including a content display page, may be presented at least by selecting a predetermined navigation tab. That is, the predetermined navigation tabs in the application may be used to navigate to the content display page.

In some embodiments, the video to be posted may also be a video to be included in a video collection. If the video is included in the video collection, the terminal device 120 may obtain a collection resource consumption configuration for the video collection configuration via the consumption configuration entry and determine a resource consumption configuration for the video based on the collection resource consumption configuration. Specifically, the terminal device 120 may present schematic diagrams of example pages 300A to 300C as shown in FIGS. 3A to 3C for posting a collection. The pages shown in the example pages 300A to 300C may be presented on the terminal device 120.

It may be understood that the example pages 300A to 300C are merely examples, and various page designs may exist in practice. Graphical elements on the page may have different layouts and different visual representations, one or more elements of which may be omitted or replaced, and one or more other elements may also be present. Embodiments of the present disclosure are not limited in this regard.

If the video to be posted is to be included in a new video collection, or the poster of the video wants to create a new collection, the terminal device 120 may present the example page as shown in FIG. 3A. The example page 300A includes an input entry 311 for obtaining a collection title, an input entry 312 for obtaining a collection description, and an input entry 313 for obtaining a collection cover. The terminal device 110 may, in response to detecting a trigger operation on the text "upload the collection cover" in the input entry 313, obtain a cover image of the collection uploaded by the poster, and present the image in the input entry 313. The example page 300A may further include a collection resource consumption configuration switch 314, and the terminal device 120 obtains the collection resource consumption configuration for the video collection input by the poster only if the switch 314 is in the enabled state.

The example page 300A also includes an input entry 316 for obtaining videos to be added to the video collection. The terminal device 120 may, in response to detecting a selection operation on the input entry 316, obtain a video uploaded by the poster to be added to the video collection. The example page 300A also includes a creation control 317 and a cancel control 318. The terminal device 120 may, in response to detecting a selection operation on the creation control 317, obtain configuration information for a video collection input by the poster in the example page 300A, and create the video collection based on this configuration information. The terminal device 120 may, in response to detecting a selection operation on the cancel control 318, delete the configuration information for a video collection input by the poster in the example page 300A, and cancel the creation of the video collection.

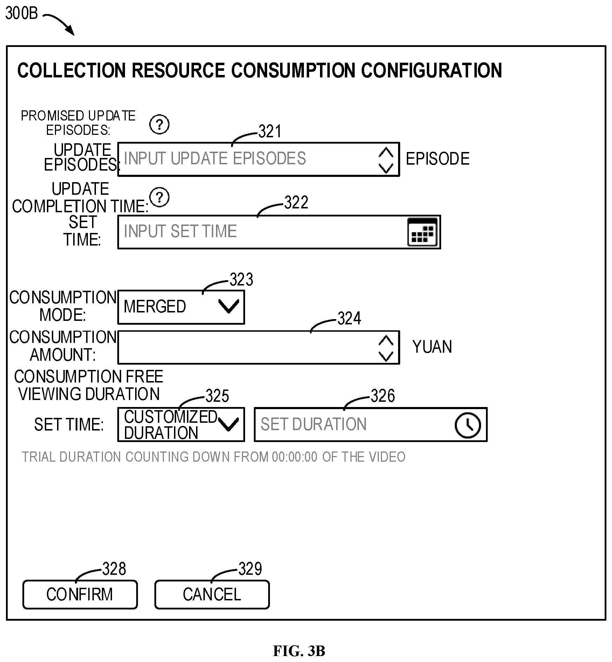

As mentioned above, the terminal device 120 obtains the collection resource consumption configuration for the video collection input by the poster only if the switch 314 is in the enabled state. Specifically, when the switch 314 is in the enabled state, the terminal device 120 may, in response to receiving a trigger operation on an editing control 315 (the editing control 315 is the consumption configuration entry provided on the example page 300A), present the example page 300B shown in FIG. 3B.

In some embodiments, for the video collection, a merged consumption mode, a partially merged consumption mode, and/or a single video consumption mode may be provided. For the merged consumption mode, the collection resource consumption configuration of the video collection may indicate the total resource amount to be consumed to obtain the viewing permission of the video collection. In this way, the user may be allowed to obtain the viewing permission of each video in the video collection by providing the total resource amount required for the video collection at a time.

In some embodiments, in the partially merged consumption mode and/or the single video consumption mode, the collection resource consumption configuration may indicate the resource amount to be consumed to obtain the viewing permission of some videos in the video collection. For example, in a single video consumption mode, the collection resource consumption configuration may allow defining the resource amount to be consumed for each video individually in the video collection. In this way, the user may be allowed to obtain the viewing permission of the video by transferring the resource amount corresponding to the single video. For another example, in a partially merged consumption mode, the collection resource consumption configuration may further define the resource amount to be consumed to obtain the viewing permission of a subset of videos within the video collection, so that the user obtains viewing permission of several videos within the subset of videos by consuming a corresponding resource amount.

In some embodiments, alternatively or additionally, the collection resource consumption configuration may indicate a customized consumption configuration indicating that the user is allowed to define the resource consumption of viewing permissions for one or more videos in the video collection. The customized consumption configuration allows users viewing the video collection to flexibly define videos for which they intend to obtain viewing permissions as needed, and transfer corresponding resource amounts. In the case that the customized consumption configurations are supported, individual videos in the video collection may be configured with corresponding resources amounts. In this way, after the video is posted, the total resource amount to be consumed by the user may be determined based on one or more videos defined by the user.

As shown in FIG. 3B, the example page 300B may be, for example, a configuration interface configured for obtaining the collection resource consumption configuration for the video collection. The example page 300B includes an input entry 321 for configuring the number of videos included in the video collection, an input entry 322 for configuring a completion update time of the video collection, an input entry 323 for configuring an access method for viewing permissions of videos in the video collection, an input entry 325 and an input entry 326 for configuring a resource-free viewing duration of a video in the video collection.

It should be noted that the collection resource configuration for the video collection may include a merged consumption mode (i.e., viewing of any video in the video collection requires obtaining viewing permission for the video collection first, and the browsing party of the video may view any video in the video collection after consuming the total resource amount required to obtain a viewing permission of the video collection), a partially merged consumption mode (i.e., the browsing party of the video may choose to obtain a viewing permission for a subset of videos in the video collection), and/or a single video consumption mode (i.e., the browsing party of the video may choose to obtain a viewing permission of a single video in the video collection). In the example of FIG. 3B, the input entry 323 for configuring an access method of viewing permissions in the video collection indicates a configuration of the total resource amount to be consumed to obtain the viewing permissions of the video collection. The terminal device 120 presents the input entry 324 for configuring the total resource amount to be consumed to obtain viewing permissions for the entire video collection only when the user input obtained via the input entry 323 is in the merged consumption mode.

The example page 300B also includes a confirmation control 328 and a cancel control 329. The terminal device 120 may, in response to detecting a selection operation on the confirmation control 328, save the collection resource consumption configuration for the video collection received in the example page 300B. The terminal device 120 may, in response to detecting a selection operation on the cancel control 329, delete the collection resource consumption configuration for the video collection received in the example page 300B. The terminal device 120 may, for example, in response to detecting a selection operation on the confirmation control 328 or the cancel control 329 in the example page 300B, return to presenting the example page 300A. It may be understood that, the terminal device 120, in response to detecting a selection operation on the confirmation control 328, presents the collection resource consumption configuration obtained in the example page 300B in a region "configuration details" in the example page 300A.

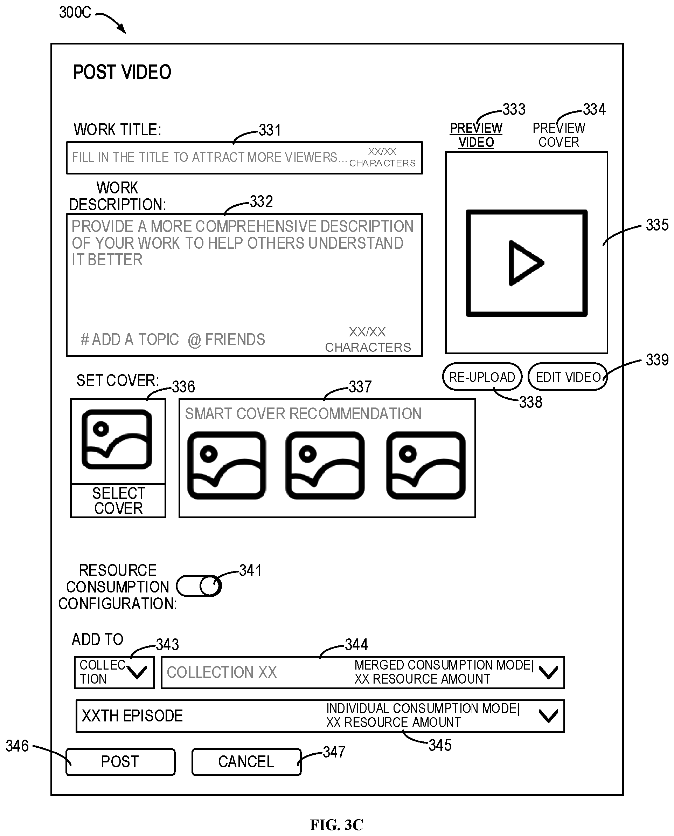

In some embodiments, if the video to be posted is to be added to the already created video collection, the terminal device 120 may provide the example page 300C shown in FIG. 3C. The example page 300C includes an input entry 331 for obtaining a video title, an input entry 332 for obtaining description information of the video, and an input entry 336 for obtaining a video cover. Similarly, the terminal device 120 may, in response to detecting a trigger operation on the text "select cover" in the input entry 336, obtain a cover image of the video uploaded by the poster, and present the image in the input entry 336. The example page 300C may also present at least one recommended cover image 337, which may be an image determined by the terminal device 120 or the server 150 that matches the video. The example page 300C may also include a resource consumption configuration switch 341. If the switch 341 is enabled, the terminal device 120 may obtain a resource consumption configuration input by the poster for the video to be currently posted.

The example page 300C may also include, for example, an input entry 343 for configuring a position where the video is to be added and an input entry 345 for configuring a resource amount for a single video being added to the video collection. In a case where the user input received by the terminal device 120 via the input entry 343 is a collection, the example page 300C may further include an input entry 344 for configuring the video collection to which the video is to be added. The terminal device 120 may obtain, in response to detecting a trigger operation on the input entry 345, configuration information input by the poster for an resource amount of the video to be added to the video collection. The example page 300C also includes a post control 346 and a cancel control 347. The terminal device 120 may, in response to a selection operation on the post control 346, add the video into the video collection indicated by the input entry 344 and post the video. The terminal device 120 may, in response to detecting a selection operation on the cancel control 347, delete the user input received in the example page 300C and cancel adding the video into the video collection.

For example, only referring to the example page 300A to the example page 300C shown in FIGS. 3A to 3C, the terminal device 120 may obtain the collection resource consumption configuration of the video collection configured by the poster. Since the collection resource consumption configuration includes the resource consumption configuration of the video in the collection, the terminal device 120 may further determine the resource consumption configuration for the video based on the collection resource consumption configuration. For example, if the collection resource consumption configuration indicates that a consumption mode of the viewing permission of the video in the collection is a "merged consumption mode", the terminal device 120 may determine that each video in the video collection inherits the resource consumption configuration of the video collection, i.e., the browsing party having the viewing permission of the video collection may view each video in the video collection. If the collection resource consumption configuration indicates that the access method for viewing permission of the video in the collection is a "partially merged consumption mode" or "single video consumption mode", the terminal device 120 may respectively obtain the resource consumption configuration for the video subset or the single video as configured by the poster.

According to the embodiment of the present disclosure, video posters are supported to autonomously and flexibly configure the viewing permission of the video as needed, thereby expanding the video posting types of the video posters, and helping posters gain resource benefits.

### Example Embodiments of Video Playing

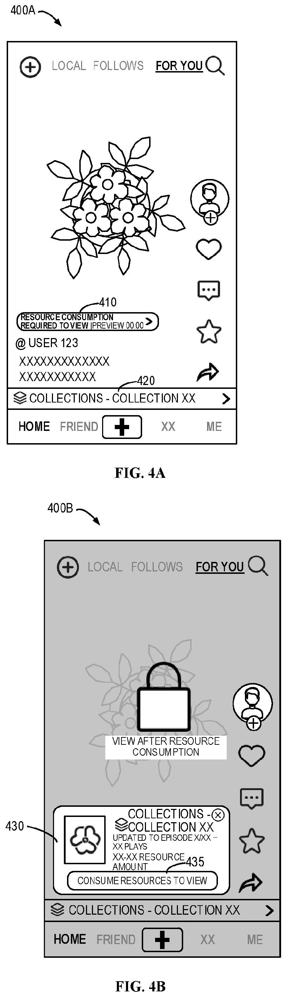

FIGS. 4A to 4E illustrate schematic diagrams of example pages 400A to 400E for video playing according to some embodiments of the present disclosure. It should be understood that the pages shown in the drawings are merely examples, and various page designs may exist in practice. The graphical elements on the page may have different layouts and visual representations, one or more of which may be omitted or replaced, and one or more other elements may also be present. Embodiments of the present disclosure are not limited in this regard.

The pages shown in the example pages 400A to 400E may be presented at the terminal device 140. For ease of discussion, the example page 400A to the example page 400E will be described with reference to the environment 100 of FIG. 1.

In the environment 100, the terminal device 140 presents a playing page of a video (which may also be referred to as a playing interface, and these two expressions may be used interchangeably). The browsing party of the video (i.e., the second user, such as the user 130) may browse the video via the playing page. In some embodiments, the playing page of the video presented by the terminal device 140 may be a content display page of the target application.

In some embodiments, the target application has an information stream of the video, i.e., the video playing page of the target application may present different videos. The terminal device 140 may, in response to detecting a viewing request for a video in the information stream, determine presentation of the video to the second user. For example, the terminal device 140 may, in response to detecting an upward sliding operation or a downward sliding operation by the user on the playing page, switch different videos in the information stream of the video. In some embodiments, the terminal device 140 may receive a selection operation for a specific video from the second user, indicating a viewing request for the video. In some embodiments, the terminal device 140 may also detect a viewing request for a video in the information stream upon receiving a launch operation for the target application or a refresh operation for the playing page.

Videos in the information stream of videos include a video with a resource consumption configuration (i.e., a video that requires consuming a certain resource amount to obtain a playing permission) and a video without a resource consumption configuration (i.e., a video that the browsing party may have the playing permission of the video without requiring to consume a resource amount).

In some embodiments of the present disclosure, if it is determined that a certain video needs to be presented to the browsing party of the video, the terminal device 140 may determine whether the browsing party has the viewing permission of the video based on the resource consumption configuration of the video and the historical consumption information of the browsing party. The historical consumption information of the browsing party indicates whether the browsing party has consumed a resource amount for obtaining a viewing permission of the video. The resource consumption configuration at least indicates a resource amount to be consumed to obtain the viewing permission of the video. The historical consumption information may be maintained on the server 150 or locally on the terminal device 140. After the browsing party provides the resource consumption of a certain video, the historical consumption information may be updated. Updates of the historical consumption information may be performed at the server 150, or locally on the terminal device 140.

If it is determined that the second user does not have the viewing permission of the video, the terminal device 140 presents a consumption entry for receiving the resource consumption. The consumption entry may be presented in any suitable form, at any suitable position. In some embodiments, the consumption entry may be presented directly in the playing interface.

As shown in FIG. 4A, the example page 400A may be, for example, a playing page of a video. As shown in FIG. 4A, the example page 400A is presented with an identification (name, avatar, etc.) of a poster posting the video and description information of the video. In some embodiments, if the video is in a video collection, the example page 400A may further present description information 420 of the video collection where the video is located. The terminal device 140 may, in response to detecting a trigger operation on the description information 420 of the video collection, present detailed information of the video collection where the video is located. If the browsing party does not have the viewing permission of the video, the terminal device 140 may present the consumption entry 410 in the example page 400A to indicate that a certain resource amount is required for viewing the current video. The consumption entry 410 may also indicate that trial viewing is supported in the current video, i.e., the current video has a resource-free viewing duration.

In some embodiments, the terminal device 140 may further determine, based on the resource consumption configuration configured by the poster, the resource-free viewing duration indicated by the resource consumption configuration. The terminal device 140 may, in response to the browsing party not having the viewing permission of the video, further play the content of the video within the indicated viewing duration, and superimpose, on the playing interface of the video, the consumption entry for receiving the resource consumption after the content within the indicated viewing duration has been played. For example, the terminal device 140 may superimpose and present the consumption entry on the playing interface.

In some embodiments, after the playing of the content within the indicated viewing duration is completed, the terminal device 140 may further cover the playing interface of the video, so that the second user cannot fully view the video without providing the required resource. In some embodiments, the terminal device 140 may superimpose a blurred masking layer on a playing interface of the video while maintaining playing of the video, the blurred masking layer being presented such that a picture of the video is at least partially visible. The terminal device 140 may also keep playing of sound of the video, and the sound is continuously played in a manner of volume attenuation. For example, the terminal device 140 may superimpose a Gaussian blurred masking layer on the playing interface to cover the playing interface of the video. In this way, after the content within the viewing duration is played, the video may still be dynamically played under the mask layer while covering the content of the video, so that the browsing party without the viewing permission cannot browse the video, but may vaguely confirm that the video still has a valuable content worth the continuing viewing.

In some embodiments, the terminal device 140 may stop playing the video in response to a completion of the playing of the content within the viewing duration, and superimpose the consumption entry on the playing interface.

For example, as shown in FIG. 4B, the terminal device 140 may present the example page 400B shown in FIG. 4B in response to the completion of the content within the viewing duration. As shown in FIG. 4B, the example page 400B includes a consumption prompt card 430, and the consumption prompt card 430 presents video related information (for example, a name of the video collection to which the video belongs) and prompt information required to obtain the viewing permission of the video. The consumption prompt card 430 is presented with a consumption entry 435.

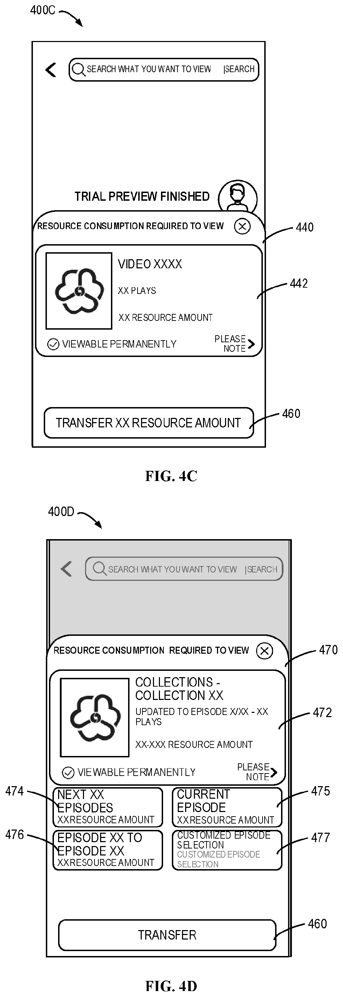

The terminal device 140 may present, in response to detecting a trigger operation on the consumption entry 410 in the example page 400A, or a trigger operation on the consumption entry 435 in the example page 400B, a resource transfer interface for transferring the resource amount. As used herein, "transferring" refers to converting a resource amount associated with one user to being associated with another user. If the video is not a video in a collection, the resource transfer interface may be, for example, the resource transfer interface 440 in the example page 400C shown in FIG. 4C. As shown in FIG. 4C, a region 442 is presented in the resource transfer interface 440, and related information of the video (for example, a video name, a video playing count, and resource amount required by the video, etc.) is presented in the region 442. The resource transfer interface 440 further includes a transfer control 460, and the terminal device 140 may, in response to receiving a selection operation on the transfer control 460, obtain the resource amount of the browsing party, so that the browsing party has the viewing permission of the video.

If the current video is included in the video collection, the resource transfer interface may be, for example, the resource transfer interface 470 in the example page 400D shown in FIG. 4D. As shown in FIG. 4D, a region 472 is presented in the resource transfer interface 470, and related information of the video collection in which the video is located (for example, the name of the video collection, the playing count of the video in the video collection, the resource amount required for the video collection, etc.) is presented in the region 442. The resource transfer interface 470 also includes consumption options for different resource amounts of the video collection (e.g., an option 474, an option 475, and an option 476). Different options correspond to different videos in the video collection, and the terminal device 140 obtains, in response to receiving a selection operation on a certain option, the resource amount corresponding to the option of the browsing party and enables the browsing party to have the viewing permission of the video indicated by the option. The resource transfer interface 470 may further include a customized option 477.

As mentioned above, in some embodiments, the collection resource consumption configuration for the video collection may indicate at least one of the following: a total resource amount to be consumed to obtain a viewing permission of the video collection, a resource amount to be consumed to obtain a viewing permission of some videos in the video collection, or a customized consumption configuration indicating that a user is allowed to define a resource consumption of a viewing permission for one or more videos in the video collection.

In some embodiments, if the collection resource consumption configuration indicates the resource amount to be consumed to obtain the viewing permission of some videos (one or more videos) in the video collection, the terminal device 140 may receive, via the option 474, the resource amount corresponding to the viewing permission of the current video and the subsequent videos after the current video, or receive, via the option 476, the resource amount corresponding to the viewing permission of several videos defined by the first user. If a resource amount corresponding to viewing permissions for one or more videos including the current video has been received, the terminal device 140 may determine that the second user is able to view the videos.

In some embodiments, if the collection resource consumption configuration indicates a customized consumption configuration, the terminal device 140 may receive the customized resource consumption input by the second user based on the customized option 477. The terminal device 140 may determine, from the input customized resource consumption, one or more videos for which the browsing party has defined to obtain viewing permissions, and obtain, based on the information, a resource amount required for obtaining the viewing permission of the videos, so that the browsing party has a corresponding viewing permission for corresponding one or more videos. If the customized resource consumption input from the second user indicates at least the resource consumption for obtaining the viewing permission of the current video, the terminal device 140 may determine that the second user has the viewing permission of the current video, and then may play the current video for the second user.

In some embodiments, if the collection resource consumption configuration indicates the total resource amount to be consumed for obtaining the viewing permission of the video collection, the terminal device 140 may provide another option (not shown) in the resource transfer interface 470 to allow the second user to input the total resource amount corresponding to the viewing permission of the video collection. If the total resource amount is received, the terminal device 140 may determine that the second user may view all videos in the video collection including the current video.

In some embodiments, the resource transfer interface 470 may also include a transfer control 460. The terminal device 140 may obtain the resource amount transferred by the second user in response to receiving a selection operation on the transfer control 460, i.e., the resource amount consumed by the second user is to be transferred to the first user. In this way, the second user may have the viewing permission of the video in the video collection. It may be understood that, after obtaining the resource amount of the viewer, the terminal device 140 updates the historical consumption information of the browsing party to indicate that the browsing party has consumed the resource amount for obtaining the viewing permission of the video.

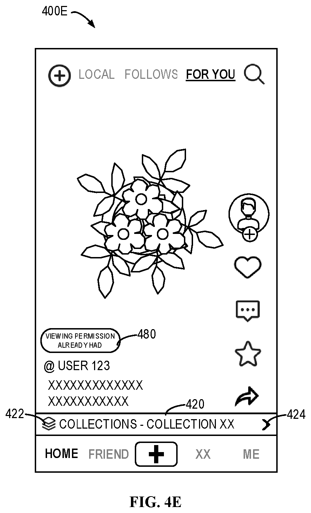

In some embodiments, after determining that the browsing party has the viewing permission of the current video, the terminal device 140 may play the full content of the video. If the terminal device 140 obtains the resource amount of the browsing party through the consumption entry, and if a blurred masking layer has been superimposed on the video playing interface by the terminal device 140 after the content within the viewing duration has been played, the terminal device 140 may continue playing the video after the viewing duration and cancel superimposing of the blurred masking layer. That is, regardless of the time node to which the video has been previously played under the blurred masking layer, after the terminal device 140 determines that the browsing party has the viewing permission of the video, the terminal device 140 continues to play the video from a node corresponding to the trial viewing duration. For example, the terminal device 140 may present the example page 400E shown in FIG. 4E. As shown in FIG. 4E, the terminal device 140 presents the video content in the example page 400E and a prompt element 480 indicating that the user has the viewing permission.

In some embodiments, the terminal device 140 may obtain identification information (for example, a cover image, a video name, a resource amount corresponding to the video, etc.) of the video indicated by the resource consumption configuration configured by the poster. The terminal device 140 may further construct and provide at least identification information of the video and a consumption guidance interface of the consumption entry based on the identification information. The consumption guidance interface may be provided to a browsing party of the work at an appropriate time. For example, a recommendation interface may be provided for the video to recommend that the browsing party views the video by consuming a specific resource. In some embodiments, a specific page may be provided in which a collection of videos that need to consume resources for viewing is provided. In this page, the consumption guidance page (also referred to as a video detail page) may be constructed and provided for each video by using the identification information indicated in the resource consumption configuration of the video, to guide the user to consume the corresponding resource to obtain the viewing permission of each video.

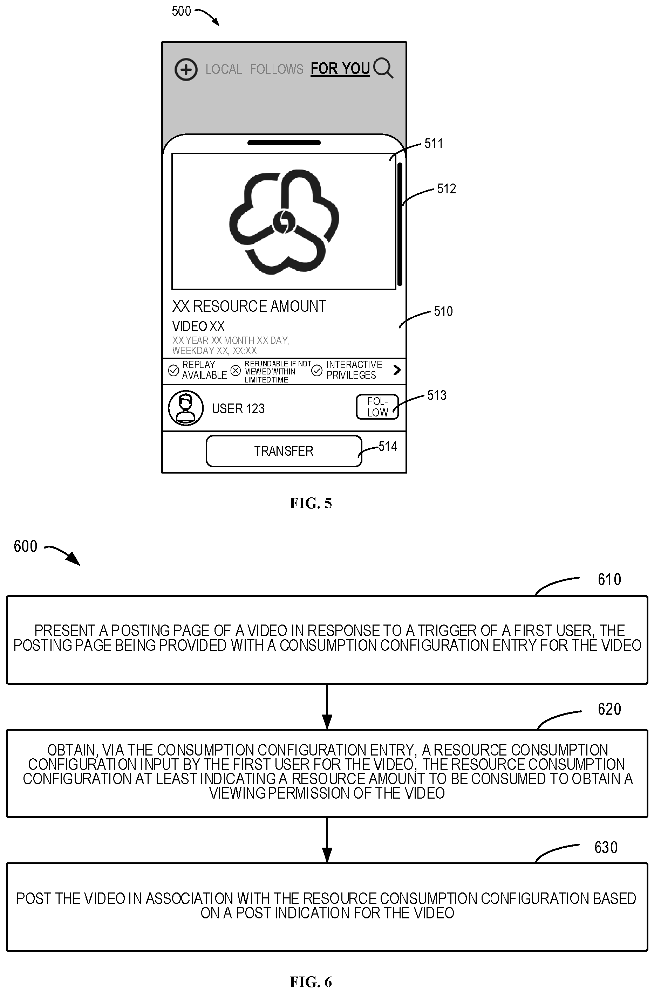

As shown in FIG. 5, FIG. 5 is a schematic diagram of an example page 500 including a consumption guiding interface according to some embodiments of the present disclosure. A consumption guidance interface 510 of the video is presented in the example page 500. The consumption guidance interface 510 presents a video cover 511 of a video, a resource amount (for example, an amount of "XX resources") required for obtaining a viewing permission of the video, a video name, or the like. The consumption guidance interface 510 also provides a user identification (e.g., a user avatar, a username) of the poster posting the video and a follow control 513 for following the poster. The consumption guidance interface 510 also provides a slide control 512 and a transfer control 514. The terminal device 140 may present more information about the video in the consumption guidance interface 510 in response to receiving a sliding operation on the slide control 512. The terminal device 140 may, in response to monitoring a selection operation on the transfer control 514, obtain the resource amount transferred by the browsing party, so that the browsing party has the viewing permission of the video indicated by the consumption guidance interface 510.

In some embodiments, based on the identification information indicated by the poster in the resource consumption configuration, such as a title, a cover, etc., the consumption guidance interface is constructed. The consumption guidance interface may be provided to a browsing user of the work, i.e., the second user, at appropriate timing. For example, a recommendation interface may be provided for the video to recommend a user to view the video by consuming a specific resource. In some embodiments, a specific page may be provided, in which a collection of videos requiring resource consumption for viewing is provided. In this page, the consumption guidance page (also referred to as a video detail page) may be constructed and provided for each video by using the identification information indicated in the resource consumption configuration of the video, to guide the user to consume the corresponding resource to obtain the viewing permission of each video.

In summary, according to the embodiments of the present disclosure, work posters are supported to autonomously and flexibly configure the viewing permission of the work as needed. This expands the work posting type of the work poster, helping the poster get more resources. Such type of work posting may be recommended in the recommended information stream of the application as needed, and the interested browsing party obtains the viewing permission by transferring the corresponding resource.

### Example Processes

FIG. 6 illustrates a flowchart of a process 600 for video posting according to some embodiments of the present disclosure. The process 600 may be implemented at the terminal device 120. The process 600 is described below with reference to FIG. 1.

At block 610, the terminal device 120 presents a posting page of a video in response to a trigger of a first user, and the posting page is provided with a consumption configuration entry for the video.

At block 620, the terminal device 120 obtains, via the consumption configuration entry, a resource consumption configuration input by the first user for the video, and the resource consumption configuration at least indicates a resource amount to be consumed to obtain a viewing permission of the video.

At block 630, the terminal device 120 posts the video in association with the resource consumption configuration based on a post indication for the video.

In some embodiments, the resource consumption configuration further indicates a resource free viewing duration of the video.

In some embodiments, the process 600 further includes: providing a preview interface for the video, and the preview interface indicates at least one of: a playing preview of the video within the indicated viewing duration, or an interface preview to request resource consumption to obtain the viewing permission.

In some embodiments, the resource consumption configuration further indicates identification information of the video.

In some embodiments, obtaining the resource consumption configuration input by the first user for the video includes: presenting a configuration interface based on a trigger for the consumption configuration entry, the configuration interface including at least an input control for the resource amount; and receiving a resource consumption configuration input on the configuration interface.

In some embodiments, obtaining the resource consumption configuration by the first user for the video input includes: obtaining, in accordance with the video is included in a video collection, a collection resource consumption configuration for the video collection via the consumption configuration entry; and determining the resource consumption configuration for the video based on the collection resource consumption configuration.

In some embodiments, the collection resource consumption configuration indicates at least one of the following: a total resource amount to be consumed by obtaining a viewing permission of the video collection, a resource amount to be consumed by obtaining a viewing permission of some videos in the video collection, a customized consumption configuration indicating that a user is allowed to define a resource consumption of a viewing permission for one or more videos in the video collection.

In some embodiments, the process 600 further includes: providing, in accordance with a detection that a first trigger for the consumption configuration entry, guidance information for the resource consumption configuration.

In some embodiments, obtaining the resource consumption configuration input by the first user for the video includes: determining whether the first user satisfies a requirement related to the consumption configuration; and receiving the resource consumption configuration input by the first user for the video in accordance with the first user satisfying the requirement.

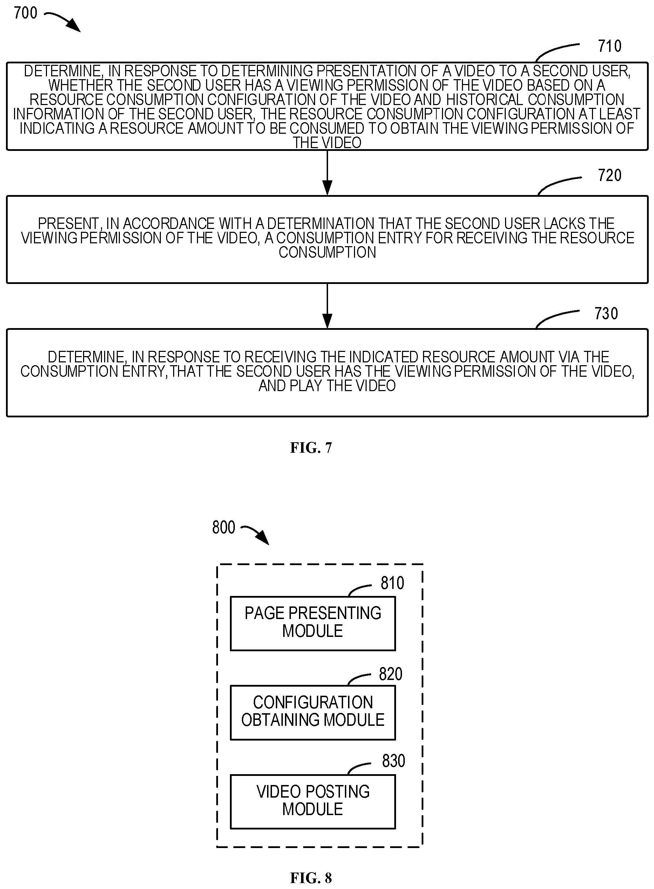

FIG. 7 illustrates a flowchart of a process 700 for video playing according to some embodiments of the present disclosure. Process 700 may be implemented at terminal device 140. The process 700 is described below with reference to FIG. 1.

At block 710, the terminal device 140 determines, in response to determining presentation of a video to a second user, whether the second user has a viewing permission of the video based on a resource consumption configuration of the video and historical consumption information of the second user, the resource consumption configuration indicating at least a resource amount to be consumed to obtain the viewing permission of the video.

At block 720, in accordance with a determination that the second user lacks the viewing permission of the video, the terminal device 140 presents a consumption entry for receiving the resource consumption.

At block 730, the terminal device 140, in response to receiving the indicated resource amount via the consumption entry, determines that the second user has the viewing permission of the video, and plays the video.

In some embodiments, the resource consumption configuration further indicates a resource free viewing duration of the video, and the process 700 further includes: playing, in accordance with a determination that the second user lacks the viewing permission of the video, content within the indicated viewing duration in the video.

In some embodiments, presenting the consumption entry for receiving the resource consumption includes: superimposing and presenting, on a playing interface of the video, the consumption entry for receiving the resource consumption after a completion of playing the content within the indicated viewing duration .

In some embodiments, presenting the consumption entry for receiving the resource consumption includes: after the completion of playing the content within the indicated viewing duration, masking a playing interface of the video, and maintaining continuous playing of sound of the video, and the sound is continuously played in a manner of volume attenuation.

In some embodiments, masking the playing interface of the video includes: superimposing a blurred masking layer on the playing interface of the video while maintaining the playing of the video, the blurred masking layer being presented such that a picture of the video is at least partially visible.

In some embodiments, playing the video includes: after determining that the second user has the viewing permission of the video, continuing to play the video after the indicated viewing duration.

In some embodiments, the resource consumption configuration further indicates identification information of the video, and the process 700 further includes: providing a consumption guidance interface of the video, and the consumption guidance interface includes at least identification information of the video and a consumption entry.

In some embodiments, the process 700 further includes: determining presentation of the video to the second user in response to detecting a viewing request for the video in an information stream.

In some embodiments, the video is included in a video collection, and collection resource consumption configuration indicates at least one of: a total resource amount to be consumed to obtain a viewing permission of the video collection, a resource amount to be consumed to obtain a viewing permission of some videos in the video collection, a customized consumption configuration indicating that a user is allowed to define a resource consumption of a viewing permission for one or more videos in the video collection.

In some embodiments, the collection resource consumption configuration indicates the customized consumption configuration, and determining that the second user has the viewing permission of the video includes: determining, in response to receiving a customized resource consumption of the second user input via the consumption entry, whether the customized resource consumption at least indicates a resource consumption for the viewing permission of the video; and in accordance with a determination that the customized resource consumption at least indicates the resource consumption for the viewing permission of the video, determining that the second user has the viewing permission of the video.

In some embodiments, the historical consumption information of the second user indicates whether the second user has consumed the resource amount for obtaining the viewing permission of the video; and after receiving the indicated resource amount via the consumption entry, the historical consumption information of the second user is updated to indicate that the second user has consumed the resource amount for obtaining the viewing permission of the video.

### Example Apparatus and Device

Embodiments of the present disclosure also provide a corresponding apparatus for implementing the above method or process.

FIG. 8 illustrates a schematic structural block diagram of an apparatus 800 for video posting according to some embodiments of the present disclosure. The apparatus 800 may be implemented or included in the terminal device 120. The various modules/components in the apparatus 800 may be implemented by hardware, software, firmware, or any combination thereof.

As shown in FIG. 8, the apparatus 800 includes a page presentation module 810 configured to present a posting page of a video in response to a trigger of a first user, the posting page being provided with a consumption configuration entry for the video. The apparatus 800 further includes a configuration obtaining module 820 configured to obtain, via the consumption configuration entry, a resource consumption configuration input by the first user for the video, the resource consumption configuration at least indicating a resource amount to be consumed to obtain the viewing permission of the video. The apparatus 800 further includes a video posting module 830 configured to post the video in association with the resource consumption configuration based on a posting indication for the video.

In some embodiments, the resource consumption configuration also indicates a resource free viewing duration of the video.

In some embodiments, the apparatus 800 further includes: a preview interface providing module configured to provide a preview interface for the video, and the preview interface at least indicates at least one of: a playing preview of the video within the indicated viewing duration, and an interface preview configured for requesting resource consumption to obtain viewing permission.

In some embodiments, the resource consumption configuration further indicates identification information of the video.

In some embodiments, the configuration obtaining module 820 includes: a configuration interface presentation module configured to present a configuration interface based on a trigger for the consumption configuration entry, the configuration interface including at least an input control for a resource amount; and a configuration receiving module configured to receive a resource consumption configuration input on the configuration interface.

In some embodiments, the configuration obtaining module 820 includes: a collection configuration obtaining module configured to obtain a collection resource consumption configuration for the video collection configuration via the consumption configuration entry in accordance with a determination that the video is included in the video collection; and a configuration determination module configured to determine the resource consumption configuration for the video based on the collection resource consumption configuration.

In some embodiments, the collection resource consumption configuration indicates at least one of the following: a total resource amount to be consumed by obtaining a viewing permission of the video collection, a resource amount to be consumed by obtaining a viewing permission of some videos in the video collection, a customized consumption configuration indicating that a user is allowed to define a resource consumption of a viewing permission for one or more videos in the video collection.

In some embodiments, the apparatus 800 further includes: a guidance information providing module configured to provide guidance information for the resource consumption configuration in accordance with a detection of a first trigger for the consumption configuration entry.

In some embodiments, the configuration obtaining module 820 includes: a determining module configured to determine whether the first user satisfies a requirement related to the consumption configuration; and a receiving module configured to, in accordance with the first user satisfying the requirement, receive the resource consumption configuration input by the first user for the video.

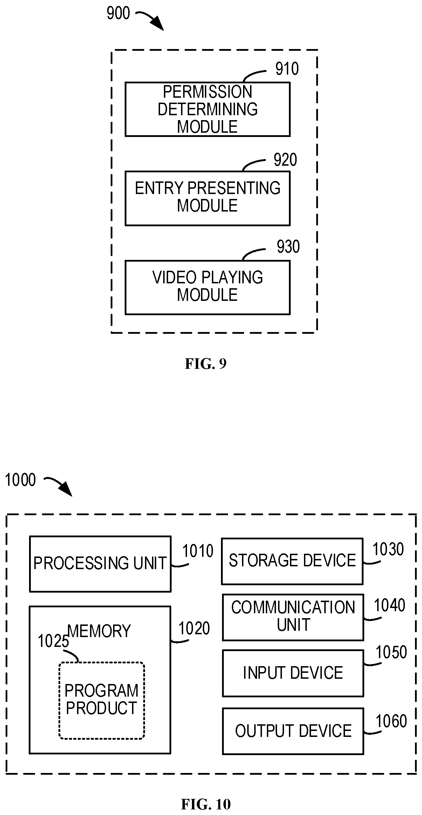

FIG. 9 illustrates a schematic structural block diagram of an apparatus 900 for video playing according to some embodiments of the present disclosure. The apparatus 900 may be implemented or included in the terminal device 140. The various modules/components in the apparatus 900 may be implemented by hardware, software, firmware, or any combination thereof.

As shown in FIG. 9, the apparatus 900 includes a permission determining module 910 configured to, in response to determining presentation of a video to a second user, determine whether the second user has a viewing permission of the video based on a resource consumption configuration of the video and historical consumption information of the second user, and the resource consumption configuration at least indicates a resource amount to be consumed to obtain the viewing permission of the video. The apparatus 900 further includes an entry presentation module 920 configured to present a consumption entry for receiving resource consumption in accordance with a determination that the second user lacks the viewing permission of the video. The apparatus 900 further includes a video playing module 930 configured to, in response to receiving the indicated resource amount via the consumption entry, determine that the second user has the viewing permission of the video, and play the video.

In some embodiments, the resource consumption configuration further indicates a resource free viewing duration of the video, and the apparatus 900 further includes: a first playing module configured to, in accordance with a determination that the second user lacks the viewing permission of the video, play the content within the indicated viewing duration in the video.

In some embodiments, the entry presentation module 920 includes: a superimposition presentation module configured to superimpose and present, on a playing interface of the video, the consumption entry for receiving the resource consumption after a completion of playing of the content within the indicated viewing duration.

In some embodiments, the entry presentation module 920 includes: a masking module configured to, after the completion of playing of the content within the indicated viewing duration, masking a playing interface of the video and maintain continuous playing of sound of the video, and the sound is continuously played in a manner of volume attenuation.

In some embodiments, the masking module is further configured to superimpose a blurred masking layer on the playing interface of the video while maintaining playing of the video, the blurred masking layer being presented such that a picture of the video is at least partially visible.

In some embodiments, the video playing module 930 includes: a continuing playing module configured to continue to play the video after the indicated viewing duration after determining that the second user has the viewing permission of the video.

In some embodiments, the resource consumption configuration further indicates identification information of the video, and the apparatus 900 further includes a consumption guidance interface providing module configured to provide a consumption guidance interface of the video, the consumption guidance interface including at least identification information of the video and a consumption entry.

In some embodiments, the apparatus 900 further includes: a video presentation determining module configured to determine presentation of the video to the second user in response to detecting a viewing request for the video in an information stream.

In some embodiments, the video is included in a video collection, and collection resource consumption configuration indicates at least one of: a total resource amount to be consumed to obtain a viewing permission of the video collection, a resource amount to be consumed to obtain a viewing permission of some videos in the video collection, a customized consumption configuration indicating that a user is allowed to define a resource consumption of a viewing permission for one or more videos in the video collection.

In some embodiments, the collection resource consumption configuration indicates the customized consumption configuration, and the video playing module 930 is configured to determine, in response to receiving a customized resource consumption of the second user input via the consumption entry, whether the customized resource consumption at least indicates a resource consumption for the viewing permission of the video; and in accordance with a determination that the customized resource consumption at least indicates the resource consumption for the viewing permission of the video, determine that the second user has the viewing permission of the video.

In some embodiments, the historical consumption information of the second user indicates whether the second user has consumed the resource amount for obtaining the viewing permission of the video; and after receiving the indicated resource amount via the consumption entry, the historical consumption information of the second user is updated to indicate that the second user has consumed the resource amount for obtaining the viewing permission of the video.

The units and/or modules included in the apparatus 800 and/or the apparatus 900 may be implemented in various ways, including software, hardware, firmware, or any combination thereof. In some embodiments, one or more units and/or modules may be implemented using software and/or firmware, such as machine-executable instructions stored on a storage medium. In addition to or as an alternative to machine-executable instructions, some or all of the units and/or modules in the apparatus 800 and/or the apparatus 900 may be implemented, at least in part, by one or more hardware logic components. By way of example and not limitation, exemplary types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

It should be understood that one or more of the above methods may be performed by a suitable electronic device or a combination of electronic devices. Such an electronic device or a combination of electronic devices may include, for example, the terminal device 110, the terminal device 140, and the server 150 in FIG. 1.

FIG. 10 illustrates a block diagram of an electronic device 1000 in which one or more embodiments of the present disclosure may be implemented. It should be understood that the electronic device 1000 illustrated in FIG. 10 is merely illustrative and should not constitute any limitation on the functionality and scope of the embodiments described herein. The electronic device 1000 shown in FIG. 10 may be configured to implement the terminal device 110 and/or the terminal device 140 in FIG. 1.

As shown in FIG. 10, the electronic device 1000 is in the form of a general-purpose electronic device. Components of the electronic device 1000 may include, but are not limited to, one or more processors or processing units 1010, a memory 1020, a storage device 1030, one or more communication units 1040, one or more input devices 1050, and one or more output devices 1060. The processing unit 1010 may be a physical or virtual processor and capable of performing various processes according to programs stored in the memory 1020. In multiprocessor systems, multiple processing units execute computer-executable instructions in parallel to improve parallel processing capabilities of the electronic device 1000.

The electronic device 1000 typically includes a plurality of computer storage media. Such media may be any available media accessible to the electronic device 1000, including, but not limited to, volatile and non-volatile media, removable and non-removable media. The memory 1020 may be volatile memory (e.g., registers, caches, random access memory (RAM)), non-volatile memory (e.g., read-only memory (ROM), electrically erasable programmable read-only memory (EEPROM), flash memory), or some combination thereof. The storage device 1030 may be a removable or non-removable medium and may include a machine-readable medium, such as a flash drive, magnetic disk, or any other medium, which may be capable of storing information and/or data and may be accessed within the electronic device 1000.

The electronic device 1000 may further include additional removable/non-removable, volatile/non-volatile storage media. Although not shown in FIG. 10, a disk drive for reading from or writing into a removable, nonvolatile magnetic disk (e.g., a "floppy disk") and an optical disk drive for reading from or writing into a removable, nonvolatile optical disk may be provided. In these cases, each drive may be connected to a bus (not shown) by one or more data media interfaces. The memory 1020 may include a computer program product 1025 having one or more program modules configured to perform various methods or actions of various embodiments of the present disclosure.

The communication unit 1040 is configured to communicate with another electronic device through a communication medium. Additionally, the functionality of components of the electronic device 1000 may be implemented in a single computing cluster or multiple computing machines capable of communicating over a communication connection. Thus, the electronic device 1000 may operate in a networked environment using logical connections with one or more other servers, network personal computers (PCs), or another network node.

The input device 1050 may be one or more input devices such as a mouse, a keyboard, a trackball, or the like. The output device 1060 may be one or more output devices, such as a display, a speaker, a printer, or the like. The electronic device 1000 may also communicate with one or more external devices (not shown) through the communication unit 1040 as needed, the external devices such as storage devices, display devices, etc., communicate with one or more devices that enable a user to interact with the electronic device 1000, or communicate with any device (e.g., a network card, a modem, etc.) that enables the electronic device 1000 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in one or more blocks in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in one or more blocks in the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in one or more blocks in the flowchart(s) and/or block diagram(s).

The flowchart(s) and block diagram(s) in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for video posting, comprising:
presenting a posting page of a video in response to a trigger of a first user, the posting page being provided with a consumption configuration entry for the video;
obtaining, via the consumption configuration entry, a resource consumption configuration input by the first user for the video, the resource consumption configuration at least indicating a resource amount to be consumed to obtain a viewing permission of the video; and
posting the video in association with the resource consumption configuration based on a post indication for the video.

2. The method of claim 1, wherein the resource consumption configuration further indicates a resource free viewing duration of the video.

3. The method of claim 2, further comprising:
providing a preview interface for the video, the preview interface indicating at least one of: a playing preview of the video within the indicated viewing duration, or an interface preview to request resource consumption to obtain the viewing permission.

4. The method of claim 1, wherein obtaining the resource consumption configuration input by the first user for the video comprises:
obtaining, in accordance with the video is comprised in a video collection, a collection resource consumption configuration configured for the video collection via the consumption configuration entry; and
determining the resource consumption configuration for the video based on the collection resource consumption configuration.

5. The method of claim 4, wherein the collection resource consumption configuration indicates at least one of:
a total resource amount to be consumed by obtaining a viewing permission of the video collection,
a resource amount to be consumed by obtaining a viewing permission of some videos in the video collection,
a customized consumption configuration indicating that a user is allowed to define a resoure consumption of a viewing permission for one or more videos in the video collection.

6. The method of claim 1, wherein obtaining the resource consumption configuration input by the first user for the video comprises:
determining whether the first user satisfies a requirement related to consumption configuration; and
receiving the resource consumption configuration input by the first user for the video in accordance with the first user satisfying the requirement.

7. A method for video playing, comprising:
determining, in response to determining presentation of a video to a second user, whether the second user has a viewing permission of the video based on a resource consumption configuration of the video and historical consumption information of the second user, the resource consumption configuration at least indicating a resource amount to be consumed to obtain the viewing permission of the video;
presenting, in accordance with a determination that the second user lacks the viewing permission of the video, a consumption entry for receiving the resource consumption; and
in response to receiving the indicated resource amount via the consumption entry,
determining that the second user has the viewing permission of the video, and
playing the video.

8. The method of claim 7, wherein the resource consumption configuration further indicates a resource free viewing duration of the video, and the method further comprises:
playing, in accordance with a determination that the second user lacks the viewing permission of the video, content within the indicated viewing duration in the video.

9. The method of claim 8, wherein presenting the consumption entry for receiving the resource consumption comprises:
superimposing and presenting the consumption entry for receiving the resource consumption on a playing interface of the video after a completion of playing the content within the indicated viewing duration.

10. The method of claim 8, wherein presenting the consumption entry for receiving the resource consumption comprises:
masking a playing interface of the video and maintaining continuous playing of sound of the video after the completion of playing the content within the indicated viewing duration, wherein the sound is continuously played in a manner of volume attenuation.

11. The method of claim 10, wherein masking the playing interface of the video comprises:
superimposing a blurred masking layer on the playing interface of the video while maintaining playing of the video, the blurred masking layer being presented such that a picture of the video is at least partially visible.

12. The method of claim 7, further comprising:
determining, in response to detecting a viewing request for the video in an information stream, presentation of the video to the second user.

13. The method of claim 7, wherein the video is comprised in a video collection, and collection resource consumption configuration configured for the video collection indicates at least one of:
a total resource amount to be consumed by obtaining a viewing permission of the video collection,
a resource amount to be consumed by obtaining a viewing permission of some videos in the video collection, or
a customized consumption configuration indicating that a user is allowed to define a resoure consumption of a viewing permission for one or more videos in the video collection.

14. The method of claim 13, wherein the collection resource consumption configuration indicates the customized consumption configuration, and determining that the second user has the viewing permission of the video comprises:
determining, in response to receiving a customized resource consumption of the second user input via the consumption entry, whether the customized resource consumption indicates at least a resource consumption for the viewing permission of the video; and
determining that the second user has the viewing permission of the video in accordance with a determination that the customized resource consumption at least indicates the resource consumption for the viewing permission of the video.

15. An apparatus for video posting, comprising:
a page presenting module configured to present a posting page of a video in response to a trigger of a first user, the posting page being provided with a consumption configuration entry for the video;
a configuration obtaining module configured to obtain, via the consumption configuration entry, a resource consumption configuration input by the first user for the video, the resource consumption configuration at least indicating a resource amount to be consumed to obtain a viewing permission of the video; and
a video posting module configured to post the video in association with the resource consumption configuration based on a posting indication for the video.

16. An apparatus for video playing, comprising:
a permission determining module configured to determine, in response to determining presentation of a video to a second user, whether the second user has a viewing permission of the video based on a resource consumption configuration of the video and historical consumption information of the second user, the resource consumption configuration at least indicating a resource amount to be consumed to obtain the viewing permission of the video;
an entry presenting module configured to present, in accordance with a determination that the second user lacks the viewing permission of the video, a consumption entry for receiving resource consumption; and
a video playing module configured to, in response to receiving the indicated resource amount via the consumption entry, determine that the second user has the viewing permission of the video, and play the video.

17. An electronic device comprising:
at least one processing unit; and
at least one memory coupled to the at least one processing unit and storing instructions for execution by the at least one processing unit, the instructions, when executed by the at least one processing unit, causing the electronic device to perform the method according to any of claims 1 to 6 or the method according to any of claims 7 to 14.

18. A computer-readable storage medium having a computer program stored thereon, the computer program being executable by a processor to implement the method according to any of claims 1 to 6 or the method according to any of claims 7 to 14.

19. A computer program product, comprising a computer program, wherein the computer program, when executed by a processor, implements the method according to any of claims 1 to 6 or the method according to any of claims 7 to 14.
